(19) Europäisches Patentamt / European Patent Office / Office européen des brevets

(11) **EP 4 281 805 B1**

(12) **EUROPEAN PATENT SPECIFICATION**

(45) Date of publication and mention
of the grant of the patent:
**29.10.2025  Bulletin 2025/44**

(21) Application number: **21946395.7**

(22) Date of filing: **23.06.2021**

(51) International Patent Classification (IPC):
**G01S 7/481** (2006.01)    **G01S 17/42** (2006.01)

(52) Cooperative Patent Classification (CPC):
**G01S 17/42; G01S 7/4816**

(86) International application number:
**PCT/CN2021/101879**

(87) International publication number:
**WO 2022/266895 (29.12.2022 Gazette 2022/52)**

(54) **OPTICAL DETECTION SYSTEM WITH ANAMORPHIC PRISM**

OPTISCHES DETEKTIONSSYSTEM MIT ANAMORPHEM PRISMA

SYSTÈME DE DÉTECTION OPTIQUE À PRISME ANAMORPHIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**29.11.2023  Bulletin 2023/48**

(73) Proprietor: **Shenzhen Yinwang Intelligent
Technologies Co., Ltd.
Shenzhen, Guangdong 518129 (CN)**

(72) Inventors:
• **MANSSEN, Daniel
80992 Munich (DE)**
• **AN, Kai
Shenzhen, Guangdong 518129 (CN)**
• **KABUK, Uensal
80992 Munich (DE)**
• **PAN, Wenqiang
Shenzhen, Guangdong 518129 (CN)**

(74) Representative: **Roth, Sebastian
Mitscherlich PartmbB
Patent- und Rechtsanwälte
Karlstraße 7
80333 München (DE)**

(56) References cited:
EP-A1- 3 584 609        WO-A1-2020/232016
CN-A- 108 139 508        CN-A- 112 612 014
CN-A- 112 789 542        CN-A- 112 946 666
CN-U- 206 725 759        DE-A1- 102004 047 022
US-A1- 2020 241 141

**Description**

<u>TECHNICAL FIELD</u>

The present disclosure relates to an optical detection system, for example light detection and ranging (LiDAR) system such as LiDAR sensors that detect target objects with various reflectivities at various distances, and an according method thereof.

<u>BACKGROUND</u>

Generally, LiDAR sensors are used for a variety of applications like autonomous driving and 3D depth sensing by smartphones. An essential part of a LiDAR sensor system is the transceiver module, which consist of a transmitter unit containing a light source, and a receiver unit containing an optoelectronic detector. Modulated or pulsed light, which is send out by the transmitter unit, will be reflected or scattered by a target object. The returning light will be collected by the receiver unit and converted into an electrical signal by the optoelectronic detector for further signal processing. Based on the runtime of the light the distance of the target object can be determined. This principle is also called time of flight (TOF). Alternatively, the distance can be determined by frequency modulated continuous waves (FMCW). The operating wavelength of a LiDAR system may lie, for example, in the near-infrared of the electromagnetic spectrum.

A certain field of view (FOV) of a LiDAR system can be achieved by scanning a line-shaped laser beam (or various laser spots arranged along a line) across the scene using at least one scanning mirror. This laser line can be realized by the transmitter unit containing at least one optical component (e.g. cylindrical or anamorph lens or a micro lens array) and/or several laser sources. The same mirror(s) or other mirror(s) can be used by the receiver unit to collect the returning light and image the laser line onto the detector. However, a sufficient dynamic range and signal to noise ratio (SNR) of the sensor is necessary to be able to detect target objects with various reflectivities at various distances ranging from a few centimeters to several hundreds of meter.

Nowadays this is achieved by binning several detector pixels resulting in an extension of the active area of the detector and thus increasing detector costs and decreasing the SNR. Receiver units containing anamorphic lenses with different focal powers in two orthogonal directions can be used to optimize the aspect ratio of the laser line's image on the sensor to balance SNR, dynamic range and detector costs. However these anamorphic receiver lenses may suffer from strong image aberrations like astigmatism resulting in blurring of the laser line's image and thus decreasing SNR of the LiDAR sensor. Although, these aberrations can be corrected by non-rotational symmetric freeform surfaces, they are difficult to manufacture and cost-intensive.

US 2020/241141 A1 describes a method for optically scanning a region, which comprises receiving an interleave sequence, propagating optical pulses, detecting pulse echoes and outputting the detected pulse echoes. DE 10 2004 047022 A1 describes a monitoring device for spatial areas, which comprises a receiving device whereon an anamorphic optical system is associated. EP 3 584 609 A1 describes a flat lens optical system comprising an apparatus for processing the image of the object to reduce said chromatic aberrations.

<u>SUMMARY</u>

In view of the above, embodiments of this disclosure aim to provide an improved optical detection system and method. An objective is to provide a cost-effective optical detection scheme that yields an extended dynamic range and an improved SNR, addressing the above-mentioned limitations.

The foregoing and other objectives are achieved by the features of the independent claims. Further implementation forms are apparent from the dependent claims, the description and the figures.

According to a first aspect of this disclosure, an optical detection system is provided. The optical detection system comprises a transmitter unit configured to emit at least one beam of optical radiation, a receiver unit comprising an imaging unit and an anamorph prism system, wherein the imaging unit comprises a two-dimensional detector and a lens system, and at least one scanner unit configured to guide the at least one beam along a scan direction across a target scene and/or to guide a reflected optical radiation, e.g. specular or back-scattered reflection, of the at least one beam from the target scene to the receiver unit. The anamorph prism system is configured to produce a processed beam by compressing the reflected optical radiation in a predefined direction by a predefined factor. The lens system is configured to focus the processed beam from the anamorph prism system onto the two-dimensional detector. Additionally, the imaging unit is configured to generate an image based on the processed beam focused on the two-dimensional detector, the image having an aspect ratio that is based on the predefined factor.

The two-dimensional detector may comprise a two-dimensional pixelated-imaging array having a plurality of photo-sensing pixels arranged on a semiconductor substrate.

In an implementation form of the first aspect, the anamorph prism system is configured to compress the reflected optical radiation by expanding an angular spectrum of the reflected optical radiation in the predefined direction by the predefined factor, and the predefined factor is greater than 1.

In this disclosure, predefined direction is also referred to as an expansion direction and predefined factor is also referred to as an expansion factor N, if not stated otherwise.

Therefore, this disclosure presents a solution to improve the dynamic range of an optical detection system by means of an anamorph prism system that is operable to augment the imaging unit so as to increase the number of illuminated pixels on the detector plane, particularly by extending the image width in one predefined detector plane direction. This increases the number of binned pixels along the predefined direction on the two-dimensional detector, which results in an improved dynamic range of the detection system while the SNR is maintained.

The anamorph prism system, for example, expands the entrance pupil of the imaging unit along the predefined direction, thereby enhancing the detection range of the system. The anamorph prism system is implemented external to the imaging unit, for example, which does not hamper or degrade the imaging performance of the imaging unit, thereby enabling an excellent imaging quality without using expensive freeform lenses.

In an implementation form of the first aspect, the anamorph prism system is configured to deviate a light path of the reflected optical radiation from the at least one scanner unit towards the imaging unit by about 90 degrees.

In other words, the anamorph prism system may fold the optical axis of the imaging unit by about 90 degrees, e.g. along the positive or negative orientation, thereby reducing the effective width of the system, e.g. the width of a LiDAR system's front cover. This reduces the visible size of the system, for example after integrating into, e.g. a car or consumer electronic device.

In an implementation form of the first aspect, the anamorph prism system comprises an anamorph wedge prism comprising a transmissive surface, a reflective surface, and an optical material in-between the transmissive surface and the reflective surface.

The transmissive surface and the reflective surface may be planar optical surfaces. The optical material may be a transparent material, e.g. glass or plastic, which is characterized by its refractive index.

In an implementation form of the first aspect, the anamorph prism system is configured to form an afocal system with a first angular magnification along a first axis and a second angular magnification along a second axis. In addition, the first axis and the second axis are orthogonal. The first axis or the second axis corresponds to the predefined direction. A ratio between the first angular magnification and the second angular magnification is equal to the predefined factor.

Thus, the anamorph prism system facilitates beam compression in the predefined direction by providing an infinite effective focal length, thereby affecting the width of the reflected optical radiation in the predefined direction, while not adding significant imaging aberrations to the receiver unit.

In an implementation form of the first aspect, the anamorph prism system comprises a transmissive band-pass filter coating on at least one surface. The transmissive band-pass filter coating is configured to transmit radiation within a wavelength range containing an emission spectrum of the at least one beam of optical radiation.

In an implementation form of the first aspect, the anamorph prism system comprises a reflective band-pass filter coating on at least one surface. The reflective band-pass filter coating is configured to reflect radiation within a wavelength range containing the emission spectrum of the at least one beam of optical radiation.

The anamorph prism system may comprise the transmissive band-pass filter coating on the transmissive surface and the reflective band-pass filter coating on the reflective surface. Thus, the band-pass filter coatings on the respective surfaces of the anamorph prism system may facilitate adequate resistance, e.g. of the LiDAR system, against ambient light without requiring separate (spectral) filter elements. This enables further cost and volume reductions, and reduces the number of optical surfaces, which has a positive impact on the straylight performance. The synergistic operation of the filter coatings results in an enhanced filtration of the ambient light due to, for instance, the passing of the ambient light twice through the transmissive band-pass filter coating, thereby improving SNR.

In an implementation form of the first aspect, the anamorph prism system comprises a first anamorph wedge prism comprising a transmissive surface, a reflective surface, and an optical material in-between the transmissive surface and the reflective surface. Additionally, the anamorph prism system comprises a second anamorph wedge prism comprising a transmissive surface, a reflective surface, and an optical material in-between the transmissive surface and the reflective surface.

The transmissive surfaces and the reflective surfaces may be planar optical surfaces. The first anamorph wedge prism may comprise a transmissive band-pass filter coating on the transmissive surface and a reflective band-pass filter coating on the reflective surface. The second anamorph wedge prism may comprise a transmissive band-pass filter coating on the transmissive surface and a reflective band-pass filter coating on the reflective surface. For the respective anamorph wedge prism, the optical material may be a transparent material, e.g. glass or plastic, which is characterized by its refractive index.

In an implementation form of the first aspect, the first anamorph wedge prism is configured to receive the reflected optical radiation from the at least one scanner unit and to produce a processed first beam. Additionally, the second anamorph wedge prism is configured to receive the processed first beam from the first anamorph wedge prism and to produce the processed beam. Further, the anamorph prism system may be configured to deviate a light path of the reflected optical radiation from the at least one scanner unit towards the imaging unit by about 180 degrees.

The anamorph prism system can fold the optical axis of the imaging unit by 180 degrees, e.g. along the positive or negative orientation. Thus, an on-axis beam entering the first anamorph wedge prism leaves the second anamorph wedge prism in anti-parallel direction with respect to its initial incident direction.

In an implementation form of the first aspect the first anamorph prism is configured to produce the processed first beam by compressing the reflected optical radiation in the predefined direction by a first predefined factor. Additionally, the second anamorph prism is configured to produce the processed beam by compressing the processed first beam in the predefined direction by a second predefined factor.

The predefined factor is determined by a product of the first predefined factor and the second predefined factor. The predefined factor can be further enhanced to further increase the number of illuminated pixels on the two-dimensional detector, which facilitates a further extension of the number of binned pixels along the predefined direction on the two-dimensional detector.

In an implementation form of the first aspect, the anamorph prism system comprises a first prism comprising a first transmissive surface, a second transmissive surface, and an optical material in-between the first transmissive surface and the second transmissive surface. Additionally, the anamorph prism system comprises a second prism comprising a first transmissive surface, a second transmissive surface, and an optical material in-between the first transmissive surface and the second transmissive surface.

The first prism and the second prism may be anamorph prisms. Additionally, the transmissive surfaces may be planar optical surfaces. The first prism may comprise a first transmissive band-pass filter coating on the first transmissive surface and a second transmissive band-pass filter coating on the second transmissive surface. The second prism may comprise a first transmissive band-pass filter coating on the first transmissive surface and a second transmissive band-pass filter coating on the second transmissive surface. For the respective prisms, the optical material may be a transparent material, e.g. glass or plastic, which is characterized by its refractive index.

In an implementation form of the first aspect, the first prism and the second prism are sequentially arranged along an optical axis of the receiver unit. Additionally, the anamorph prism system is configured to deviate the position of the optical axis of the receiver unit by a predefined offset.

In an implementation form of the first aspect, the predefined factor is determined as a function of a ray angle of exitance from prism surfaces through which the reflected optical radiation traverses and a ray angle of incidence on prism surfaces through which the reflected optical radiation traverses.

Thus, the anamorph prism system may operate in pure transmission by means of an anamorphic prism pair, which are sequentially arranged along the optical axis of the receiver unit, and only possesses a minor lateral offset. This simplifies the alignment of the optical components with respect to each other, for example.

In an implementation form of the first aspect, the lens system is configured to focus the processed beam received at different angles of incidence onto the two-dimensional detector.

For instance, the processed beam is focused onto the photo-sensing pixels or photo-sensors of the two-dimensional pixelated-imaging array. This improves the amount of light hitting the photo-sensing pixels, thereby increasing the range of the LiDAR sensor, for example.

In an implementation form of the first aspect, the lens system is rotational symmetric with respect to the optical axis of the receiver unit.

The lens system may comprise a plurality of axisymmetric lenses, e.g. spherical or aspherical lenses, having axial symmetry with respect to the optical axis of the receiver unit. This reduces complexity as well as cost for imaging due to, for instance the simpler surface design and lower manufacturing, testing and assembly costs of axisymmetric lenses compared to freeform lenses.

In an implementation form of the first aspect, the at least one scanner unit comprises at least one mirror configured to rotate or oscillate about an axis orthogonal to the scan direction. For instance, the at least one scanner unit may comprise a scanner, e.g. a common scanner for the transmitter unit and the receiver unit, that guides the at least one beam along the scan direction across the target scene and further guides the reflected optical radiation of the at least one beam from the target scene to the receiver unit. Alternatively, the at least one scanner unit may comprise a first scanner, e.g. a transmitting scanner, for the transmitter unit that guides the at least one beam along the scan direction across the target scene, and a second scanner, e.g. a receiving scanner, for the receiver unit that guides the reflected optical radiation of the at least one beam from the target scene to the receiver unit.

In an implementation form of the first aspect, the optical detection system has a package dimension of around 110 mm x 100 mm x 60 mm.

According to a second aspect of this disclosure, an optical detection method is provided. The optical detection method comprises the steps of providing at least one beam of optical radiation, scanning the at least one beam along a scan direction across a target scene and/or guiding a reflected optical radiation of the at least one beam from the target scene, producing a processed beam by compressing the reflected optical radiation in a predefined direction by a predefined factor, and generating an image based on the processed beam, the image having an aspect ratio that is based on the predefined factor.

The compression of the reflected optical radiation may be performed by expanding an angular spectrum of the reflected optical radiation in the predefined direction by the predefined factor, and the predefined factor may, for example, be greater than 1.

It is to be noted that the optical detection method according to the second aspect corresponds to the optical detection system according to the first aspect and its implementation forms. Accordingly the optical detection method of the second aspect may have corresponding implementation forms. Further, the optical detection method of the second aspect achieves the same advantages and effects as the system of the first aspect and its respective implementation forms.

BRIEF DESCRIPTION OF THE DRAWINGS

The above described aspects and implementation forms will be explained in the following description of specific embodiments in relation to the enclosed drawings, in which

Fig. 1 is an exemplary block representation of an optical detection system according to an embodiment of this disclosure;

Figs. 2A and 2B are cross-sectional views of a first exemplary embodiment of a receiver unit illustrating optical layout in two orthogonal planes;

Fig. 3 is a cross-sectional view of an exemplary anamorph wedge prism according to the first exemplary embodiment of the receiver unit;

Fig. 4A illustrates an exemplary image generated on the two-dimensional detector without the anamorph prism system;

Fig. 4B illustrates an exemplary image generated on the two-dimensional detector according to an embodiment of this disclosure;

Figs. 5A and 5B illustrate modulation transfer functions as a function of object angular space according to the first exemplary embodiment of the receiver unit;

Figs. 6A and 6B are cross-sectional views of a second exemplary embodiment of the receiver unit illustrating optical layout in two orthogonal planes;

Fig. 7A is a cross-sectional view of a third exemplary embodiment of the receiver unit;

Fig. 7B is a cross-sectional view of an exemplary anamorph prism system according to the third exemplary embodiment of the receiver unit; and

Fig. 8 is an exemplary flow diagram of the optical detection method according to an embodiment of this disclosure.

DETAILED DESCRIPTION OF EMBODIMENTS

Reference will now be made in detail to the embodiments of the present disclosure, examples of which are illustrated in the accompanying drawings. However, the following embodiments of the present disclosure may be variously modified and the range of the disclosure is not limited by the following embodiments. Reference signs for similar entities in different embodiments are partially omitted.

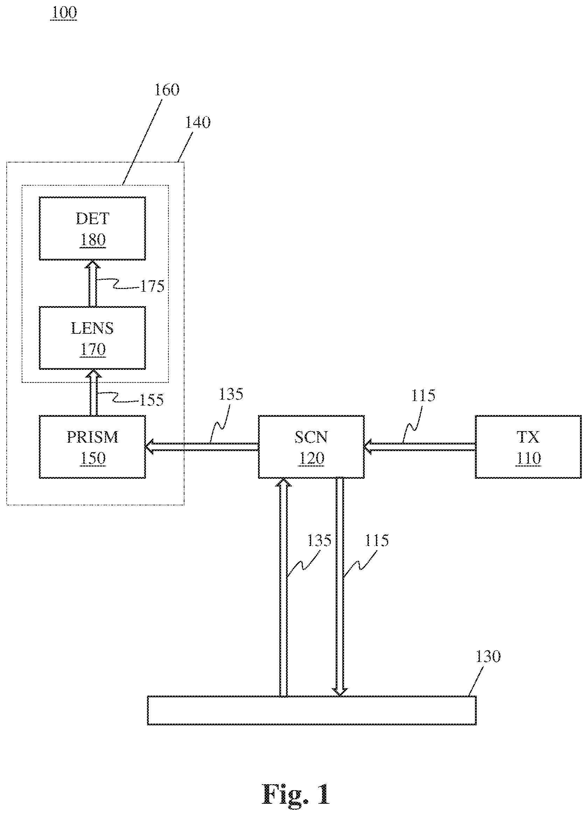

In Fig. 1, an exemplary block representation of the optical detection system 100 according to the first aspect of this disclosure is illustrated. The optical detection system 100 comprises a transmitter unit 110 comprising at least one light source, e.g. coherent light sources such as laser diodes, and an optical system so as to operate as an optical pulse transmitter. Alternatively, the transmitter unit 110 may comprise a modulated continuous-wave laser source. The transmitter unit 110 is therefore configured to emit multiple beams of optical radiation or laser lines 115 in order to facilitate laser imaging. The laser line 115 may correspond to a line-shaped laser beam or various circular laser beams arranged along a line.

The optical detection system further comprises a receiver unit 140 comprising an anamorph prism system 150, and an imaging unit 160. The receiver unit 140 may be referred to as a photo receiver or an optical receiver. An optical axis of the anamorph prism system 150 and an optical axis of the imaging unit 160 are aligned so that beams projected from the anamorph prism system 150 reach to the imaging unit 160 without significant degradation.

The imaging unit 160 comprises a lens system 170 and comprises a two-dimensional detector 180. The lens system 170 may comprise a plurality of axisymmetric lenses that are rotational symmetric with respect to an axis of the receiver unit 140. The two-dimensional detector 180 comprises a two-dimensional pixelated-imaging array having a plurality of photo-sensing pixels arranged on a semiconductor substrate. For example, the two-dimensional detector 180 may comprise single-photon avalanche diodes (SPAD) array or avalanche photodiodes (APD) array or the like.

The optical detection system 100 further comprises a scanner unit 120 configured to direct the laser line 115 emitted from the transmitter unit 110 towards a target scene 130, and therefore scans the target scene 130, for instance, according to a scan pattern. The scanner unit 120 may be referred to as a beam scanner, optical scanner, or laser scanner. The scanner unit 120 may include one or more scanning mirrors and one or more actuators driving the mirrors to rotate, tilt, pivot, or move the mirrors in an angular manner about one or more axes, for example.

The scanner unit 120 is further configured to guide a reflected radiation 135, which corresponds to a reflection, either specular or back-scattered reflection, of the laser lines 115 from a target object located in the target scene 130 towards the receiver unit 140, specifically onto the anamorph prism system 150. It is therefore conceivable that the scanner unit 120 may comprise a first scanner acting on the emitted laser lines 115 from the transmitter unit 110 and guides the laser line 115 towards the target scene 130, and a second scanner collecting the reflected radiation 135 from the target scene 130 and guiding the reflected radiation towards the receiver unit 140.

Therefore, the optical detection system 100 facilitates laser imaging, detection and ranging along the target scene 130. The receiver unit 140, in principle, performs the imaging, i.e. to process the reflected radiation 135 and to generate image of the laser line upon scanning the target scene 130 and receiving the back-scattered light therefrom. The anamorph prism system 150 produces a processed beam 155 from the received reflected radiation 135 and projects onto the lens system 170. The lens system 170 further reshapes the processed beam 155, thereby producing an imaging beam 175, by focusing the processed beam 155 onto the two-dimensional detector 180. The impact of the anamorph prism system 150 on said laser imaging will be described in the following implementations.

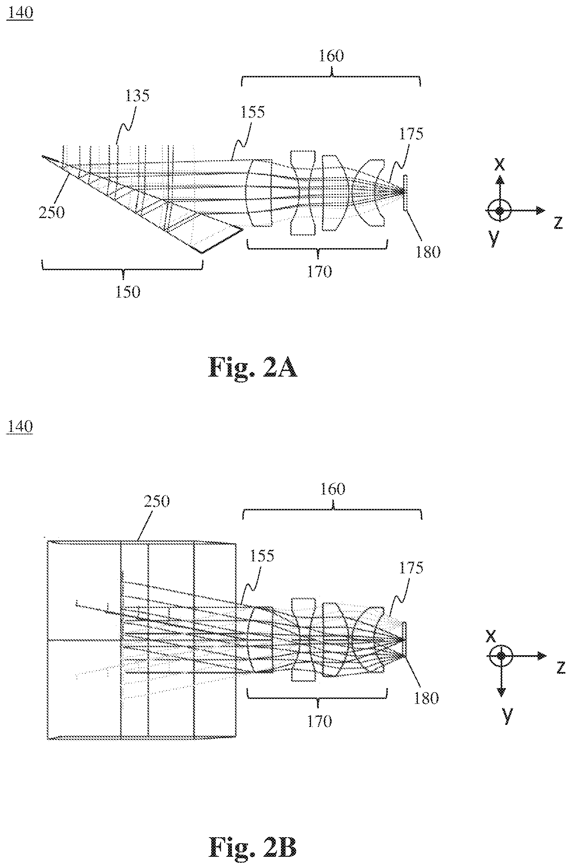

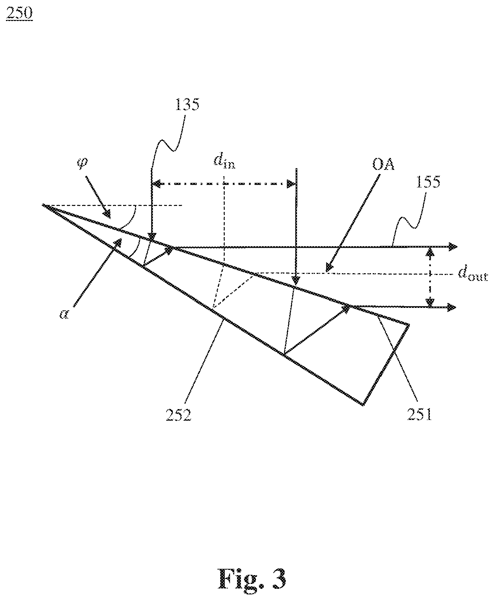

Along Fig. 2A and 2B, cross-sectional views of a first exemplary embodiment of the receiver unit 140 are illustrated. Fig. 2A shows the cross-sectional view of the receiver unit 140 along zx plane and Fig. 2B shows the cross-sectional view of the receiver unit 140 along zy plane. Herein, the scanning direction is realized by a rotation of the scanner unit 120 around the y-axis. The anamorph prism system 150 comprises an anamorph wedge prism 250, for example a reflective anamorph wedge prism. The detailed construction of the anamorph wedge prism 250 will be described along Fig. 3.

As exemplarily illustrated, the anamorph wedge prism 250 receives the reflected radiation or the back-scattered light 135 from the scanner unit 120 and produces the processed beam 155, by compressing the reflected radiation along a predefined direction, herein also referred to as an expansion direction, by a predefined factor, herein also referred to as an expansion factor N. For this example, the expansion direction is parallel to the scan direction, e.g. around y axis. In general, the laser line 115 corresponds to an optical radiation having two orthogonal directions, namely a short laser line axis and a long laser line axis, and the expansion direction corresponds to the direction that is shorter of the two orthogonal directions.

The compression of the reflected radiation 135 corresponds to an expansion of an angular spectrum of the reflected radiation 135, along the expansion direction, by the expansion factor. The anamorph wedge prism 250 then projects the processed beam 155 onto the lens system 170. Herein, the lens system 170 is illustrated with four optically cascaded lenses. However, further alternative geometry or arrangements of lenses suitable for imaging are not omitted and are analogously applicable.

The lens system 170 focuses the processed beam 155 received from the anamorph wedge prism 250. The imaging beam or focused beam 175 is then projected onto the two-dimensional detector 180, onto the two-dimensional pixelated-imaging array of photo-sensing pixels or sensors, thereby generating an image onto the two-dimensional detector 180 based on the processed beam 155.

As noted before, the lens system 170 is rotational symmetric with respect to its optical axis. The lens system 170 has a full field of view (FOV) of 25 degrees along the long laser line axis of the lase line 115. In an example, the lens system 170 has a focal ratio or F-number of 1.14 and an effective focal length (EFL) of 13.1 mm. Table 1 contains the corresponding optical data of the lens system 170.

Table 1: Optical data of the lens system 170.

| EFL = 13.1 mm, FOV = 25 deg, F-number = 1.14 |
| --- |

(continued)

| Element | Surf-Type | Radius | Thickness | Refractive Index | Abbe # | Conic constant | Asphere Coefficients |
|---|---|---|---|---|---|---|---|
| L1 S1 / Stop | STANDARD | 14.270 | 4.0000 | 1.847 | 23.787 | 0.0000 | |
| L1 S2 | STANDARD | 149.280 | 4.3500 | | | 0.0000 | |
| L2 S1 | STANDARD | -10.750 | 1.5000 | 1.517 | 64.212 | 0.0000 | |
| L2 S2 | STANDARD | 16.830 | 2.2600 | | | 0.0000 | |
| L3 S1 | STANDARD | -116.900 | 4.0000 | 1.81 | 41 | 0.0000 | |
| L3 S2 | Asphere | -10.056 | 0.5000 | | | 0.0000 | A4 = 1.293E-4, A6 = -5.235E-7, A8 = 8.848E-9 |
| L4 S1 | STANDARD | 7.130 | 3.5000 | 1.847 | 23.787 | 0.0000 | |
| L4 S2 | STANDARD | 7.680 | 4.5200 | | | 0.0000 | |
| Sensor Cover S1 | STANDARD | Plano | 0.5000 | 1.458 | 67.821 | 0.0000 | |
| Sensor Cover S2 | STANDARD | Plano | 0.0000 | | | 0.0000 | |
| Sensor | STANDARD | Plano | - | | | 0.0000 | |

In Table 1, the term "STANDARD" stands for conventional spherical surfaces. The sag profile of the aspheric surface can be calculated on the basis of the following equation:

$$z(h) = ch^2 / \left\{ 1 + [1 - (k+1)c^2 h^2]^{\frac{1}{2}} \right\} + A_4 h^4 + A_6 h^6 + A_8 h^8 \qquad (1)$$

Where c is the reciprocal of the radius of curvature, h is the transversal distance with respect to the optical axis, k is the conic constant and $A_4$, $A_6$, and $A_8$ are the aspheric coefficients, as provided in Table 1.

In Fig. 3, a cross-sectional view of the exemplary anamorph wedge prism 250 of Figs. 2A and 2B is illustrated. In this example, the anamorph wedge prism 250 comprises a first planar optical surface 251 and a second planar optical surface 252, operable as a transmissive surface 251 and a reflective surface 252, respectively. As illustrated in Fig. 3, the reflective surface 252 is tilted by a wedge angle $\alpha$ with respect to the transmissive surface 251. Additionally, the anamorph wedge prism 250 is tilted by a tilt angle $\varphi$ with respect to the optical axis OA of the imaging unit 160. The anamorph wedge prism 250 may be made of a transparent optical material, e.g. glass or plastic, which is characterized by the refractive index n. The expansion factor N for the anamorph wedge prism 250 is a function of the wedge angle $\alpha$, the tilt angle $\varphi$, and the refractive index, which can be defined as:

$$N = \frac{\cos \varphi \cos(2\alpha + \beta)}{\cos \beta \sin \varphi} \qquad (2)$$

with

$$\sin \beta = \left( \frac{\sin \varphi}{n} \right) \qquad (3)$$

As illustrated in Fig. 3, the anamorph wedge prism 250 is afocal and folds the optical axis OA by 90 degrees. The reflected radiation 135, for example with a beam width $d_{in}$, first refracts through the transmissive surface 251, enters the transparent optical material. Afterwards, the reflected radiation 135 reflects at the reflective surface 252 and finally propagates towards the transmissive surface 251, where it refracts and leaves the anamorph wedge prism 250 in the form of the processed beam 155, for example with a beam width $d_{out}$, due to the expansion of the angular spectrum of the reflected radiation 135 by the expansion factor N. Thus there is:

$$d_{\text{in}} = d_{\text{out}} N$$

where, it is assumed that beam diffraction is neglected. The processed beam 155 leaves the anamorph wedge prism 250 under an angle of around 90 degrees with respect to the incident angle of the reflected radiation 135. Beam widths are changed in the direction of the x-axis. There is no beam width compression in the direction of the y-axis. The compression directly after the prism results in an expansion of the image in the detector 180 plane.

For example, if the anamorph wedge prism 250 has a tilt angle $\varphi$ = 22.178 degrees, a wedge angle $\alpha$ = 11.690 degrees, and the refractive index of the optical material is n = 1.50839, the expansion factor N according to equations (2) and (3) is equal to around 2.

Additionally, the anamorph wedge prism 250 may comprise a transmissive band-pass filter coating on the transmissive surface 251 and a reflective band-pass filter coating on the reflective surface 252. The reflective band-pass filter coating ensures that most of the energy of the incident laser light will be reflected, whereby the transmissive band-pass filter coating and the reflective band-pass filter coating collectively provide resistance against ambient light. The transmissive band-pass filter coating, for example, allows to transmit a certain wavelength band including the emission wavelength of the transmitter unit 110 and to reflect light with wavelengths outside of this band. The reflective band-pass filter coating allows to reflect the wavelength band of interest and to transmit all the other spectral components of the light.

For example, the reflective band-pass filter can be implemented with around 30 nm filter width coated on the reflective surface 252 and the transmissive band-pass filter can be implemented with 350 nm filter width coated on the transmissive surface 251. The transmissive band-pass filter width requires to be quite large to compensate for the central wavelength shifts of the filter band due to the variation of the angle of incidence between the first and second filter pass. The filter location on the respective prism surfaces has the following advantages:

a) The light passes the transmissive band-pass filter twice, resulting in a doubling of the filter density.
b) The band-pass filter is far away from the two-dimensional detector 180 and tilted with respect to the optical axis of the imaging unit 160, resulting in an improved ghost and straylight performance of the system, as ghost reflections caused by the transmissive surface 251 do not hit the two-dimensional detector 180.
c) No need of additional filter elements, which reduces system cost and size.

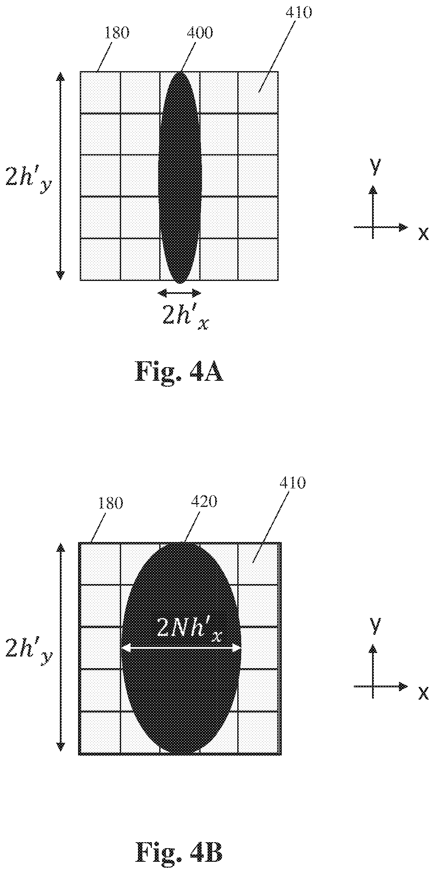

Along Fig. 4A and Fig. 4B, the influence of the anamorph prism system 150 on laser imaging is exemplarily illustrated. In Fig. 4A, an exemplary laser line image 400 is illustrated that is generated on the two-dimensional detector 180 by the imaging unit 160, where the receiver unit 140 excludes the anamorph prism system 150. In Fig. 4B, an exemplary laser line image 420 is illustrated that is generated on the two-dimensional detector 180 by the imaging unit 160, where the receiver unit 140 includes the anamorph prism system 150. The two-dimensional detector 180 is further illustrated as a two-dimensional pixelated-imaging array of photo-sensing pixels 410.

The images 400, 420 are illustrated as a black fill area in two dimensions corresponding to a laser line. The axes x, y represent the short laser line axis and the long laser line axis, respectively. The short laser line axis is taken as the scan direction. For the image 400, the full image heights $2h'_x$ and $2h'_y$ of the laser line on the two-dimensional detector 180 is given by:

$$2h'_x = 2EFL_{Objective\ 170} \cdot \tan\theta_x \tag{5}$$

$$2h'_y = 2EFL_{Objective\ 170} \cdot \tan\theta_y \tag{6}$$

$$AR_{400} = \frac{2h'_x}{2h'_y} = \frac{\tan\theta_x}{\tan\theta_y} \tag{7}$$

where, $EFL_{Objective\ 170}$ is the effective focal length of the lens system 170, $\theta_x$ and $\theta_y$ are the half angular widths of the laser line in its far field in x and y direction, respectively, and $AR_{400}$ is the aspect ratio of the image 400.

For the image 420, the full image heights $2h''_x$ and $2h'_y$ of the laser line on the two-dimensional detector 180 is given by:

$$2h''_x = 2Nh'_x = 2EFL_{Objective\ 170} \cdot N\tan\theta_x \tag{8}$$

$$2h'_y = 2EFL_{Objective\ 170} \cdot \tan\theta_y \tag{9}$$

$$AR_{420} = \frac{2h''_x}{2h'_y} = N\frac{\tan\theta_x}{\tan\theta_y} = NAR_{400} \qquad\qquad (10)$$

where, $EFL_{Objective\ 170}$ is the effective focal length of the lens system 170, $\theta_x$ and $\theta_y$ are the half angular widths of the laser line in its far field in x and y direction, respectively, and $AR_{420}$ is the aspect ratio of the image 420.

Therefore, the anamorph prism system 150 defines the aspect ratio of the image 420 in terms of the expansion factor, determines the aspect ratio of the image 420 multiplied by the expansion factor N. In other words, the anamorph prism system 150 expands the image height in the x direction by the expansion factor N, due to the expansion of the angular spectrum of the reflected optical radiation 135. Thus, more photo-sensing pixels 410 on the two-dimensional detector 180 are illuminated, which improves the dynamic range. It is to be noted that the expansion is carried out parallel to the short laser line axis, i.e. x direction, and no expansion is carried out in the orthogonal direction, i.e. y direction.

It is to be noted that, although the images 400, 420 are illustrated as two-dimensional images on the two-dimensional decoder 180, the optical detection system 100 is able to receive depth information from the target scene 130 due to, for example, the transmission and reception of pulsed light beams, thereby possessing three-dimensional information based on the time of flight (TOF) principle.

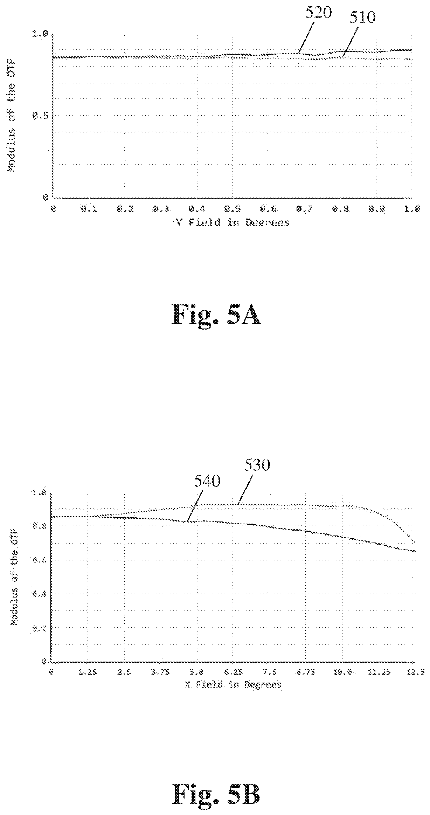

Along Fig. 5A and Fig. 5B, the monochromatic modulation transfer functions (MTF), i.e. modulus of the optical transfer function (OTF), of the receiver unit 140 are exemplarily illustrated. Fig. 5A illustrates MTF performance for a spatial frequency of 25 cycles/mm as a function of the light incident angle for infinite target object distances, where the incident field direction is along the short laser line axis. The horizontal axis represents object field angles in degrees and the vertical axis represents MTF. The dashed line 510 represents MTF values in sagittal direction and the solid line 520 represents MTF in tangential direction. Fig. 5B illustrates MTF performance for a spatial frequency of 25 cycles/mm as a function of the light incident angle for infinite target object distances where the incident field direction is along the long laser line axis. The horizontal axis represents object field angles in degrees and the vertical axis represents MTF. The dashed line 530 represents MTF values in sagittal direction and the solid line 540 represents MTF in tangential direction.

The wavelength of the monochromatic incident light is 900 nm. As shown in Figs 5A and 5B, the imaging performance of the receiver unit 140 is excellent for incident light directions along the short laser line axis as well as the field along long laser line axis. Therefore, most imaging aberrations, like astigmatism, are corrected and collimated light entering the receiver unit 140 from various angles of incidence are focused on the two-dimensional detector 180, for example.

However, the implementation of the anamorph prism system 150 may cause to a bending or distortion of the laser line image on the two-dimensional detector 180, which may not be compensated by the imaging unit 160. However, said bending effect can be pre-compensated by bending the laser line emitted by the transmitter unit 110. The bending effect can also be compensated by binning and reading out the pixels of the two-dimensional detector 180 in the bended direction.

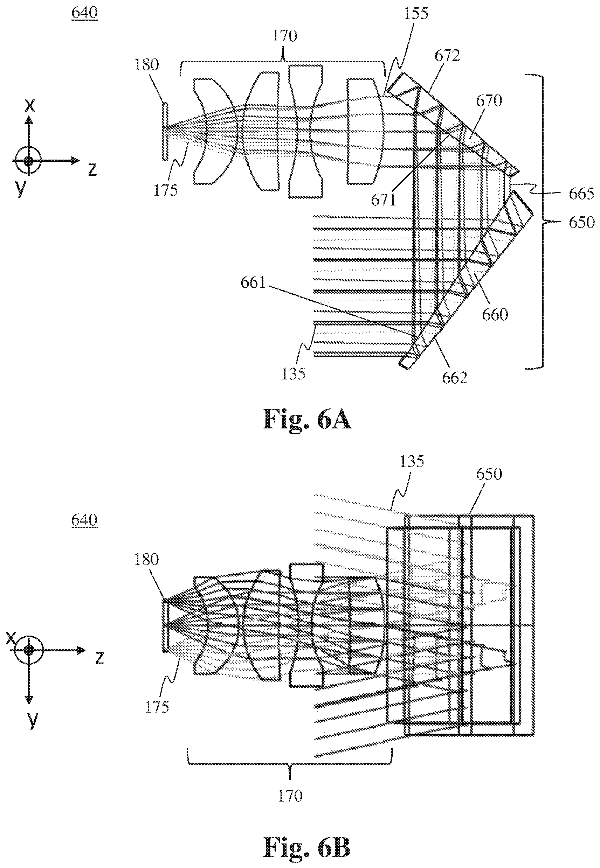

Along Fig. 6A and 6B, cross-sectional views of a second exemplary embodiment of the receiver unit 640 are illustrated. Fig. 6A shows the cross-sectional view of the receiver unit 640 along zx plane and Fig. 6B shows the cross-sectional view of the receiver unit 640 along zy plane. Herein, the scanning direction of the scanner unit 120 is realized by a rotation of the scanner unit 120 around the y-axis.. The receiver unit 640 comprises an anamorph prism system 650, a lens system 170 and a two-dimensional detector 180. The lens system 170 and the two-dimensional detector 180 are analogous to the lens system 170 and the two-dimensional detector 180 of the receiver unit 140, and therefore are not discussed for the receiver unit 640.

The anamorph prism system 650 comprises a first anamorph wedge prism 660 comprising a first planar optical surface 661 and a second planar optical surface 662, operable as a transmissive surface 661 and a reflective surface 662, respectively. The anamorph prism system 650 further comprises a second anamorph wedge prism 670 comprising a first planar optical surface 671 and a second planar optical surface 672, operable as a transmissive surface 671 and a reflective surface 672, respectively. The first anamorph wedge prism 660 and the second anamorph wedge prism 670 are, for example, made of a transparent optical material, e.g. glass or plastic. Additionally, the first anamorph wedge prism 660 may comprise a transmissive band-pass filter coating on the transmissive surface 661 and a reflective band-pass filter coating on the reflective surface 662. Analogously, the second anamorph wedge prism 670 may comprise a transmissive band-pass filter coating on the transmissive surface 671 and a reflective band-pass filter coating on the reflective surface 672.

As illustrated, the first anamorph wedge prism 660 receives the reflected radiation or the back-scattered light 135 from the scanner unit 120 and produces a processed first beam 665, by expanding an angular spectrum of the reflected radiation 135 along the predefined direction, hereinafter referred to as the expansion direction, by a first predefined factor, hereinafter referred to as a first expansion factor $N_1$. The reflected radiation 135 first refracts through the transmissive surface 661, enters the transparent optical material. Afterwards, the reflected radiation 135 reflects at the reflective surface 662 and finally propagates towards the transmissive surface 661, where it refracts and leaves the first anamorph wedge prism 660 in the form of the processed first beam 665.

The second anamorph wedge prism 670 receives the processed first beam 665 from the first anamorph wedge prism 660 and produces the processed beam 155, by expanding an angular spectrum of the processed first beam 665 along the expansion direction by a second predefined factor, hereinafter referred to as a second expansion factor $N_2$. The processed first beam 665 first refracts through the transmissive surface 671, enters the transparent optical material. Afterwards, the processed first beam 665 reflects at the reflective surface 672 and finally propagates towards the transmissive surface 671, where it refracts and leaves the second anamorph wedge prism 670 in the form of the processed beam 155. For both scenarios, the expansion direction is parallel to the scan direction.

The second anamorph wedge prism 670 then projects the processed beam 155 onto the lens system 170. As it can be seen, the direction of the reflected radiation 135 entering the first anamorph wedge prism 660 and the direction of the processed beam 155 leaving the second anamorph wedge prism 670 are anti-parallel. Thus, the anamorph prism system 650 folds the optical axis of the receiver unit 640 by about 180 degrees. This technique is advantageous, especially compared to the implementation of the anamorph prism system 150, since the anti-parallel direction of the reflected radiation 135 and the processed beam 155 corrects image distortion and thus eliminates the possibility of causing a bending of the laser line image on the two-dimensional detector 180.

The lens system 170 then focuses the processed beam 155 received from the second anamorph wedge prism 670. The imaging beam or focused beam 175 is then projected onto the two-dimensional detector 180, onto the two-dimensional pixelated-imaging array of photo-sensing pixels or sensors, thereby generating an image onto the two-dimensional detector 180 based on the processed beam 155.

It is to be noted that the first anamorph wedge prism 660 and the second anamorph wedge prism 670 can be identical anamorph wedge prisms, for instance, governing the properties of the anamorph wedge prism 250 of the receiver unit 140. Hence, the construction details of the anamorph wedge prism 250 as described along Fig. 3 are analogously applicable to the first anamorph wedge prism 660 and the second anamorph wedge prism 670.

Therefore, the first expansion factor $N_1$ for the first anamorph wedge prism 660 can be realized as:

$$N_1 = \frac{\cos \varphi_1 \cos(2\alpha_1 + \beta_1)}{\cos \beta_1 \sin \varphi_1} \qquad (11)$$

with

$$\sin \beta_1 = \left(\frac{\sin \varphi_1}{n_1}\right) \qquad (12)$$

where, $\alpha_1$ is the wedge angle between the transmissive surface 661 and the reflective surface 662, $\varphi_1$ is the tilt angle of the first anamorph wedge prism 660 with respect to an optical axis of the second anamorph wedge prism 670, and $n_1$ is the refractive index of the optical material.

Analogously, the second expansion factor $N_2$ for the second anamorph wedge prism 670 can be realized as:

$$N_2 = \frac{\cos \varphi_2 \cos(2\alpha_2 + \beta_2)}{\cos \beta_2 \sin \varphi_2} \qquad (13)$$

with

$$\sin \beta_2 = \left(\frac{\sin \varphi_2}{n_2}\right) \qquad (14)$$

where, $\alpha_2$ is the wedge angle between the transmissive surface 671 and the reflective surface 672, $\varphi_2$ is a tilt angle of the second anamorph wedge prism 670 with respect to the optical axis of the imaging unit 160, and $n_2$ is the refractive index of the optical material.

Accordingly, the predefined factor or the expansion factor N for the anamorph prism system 650 can be realized as:

$$N \approx N_1 N_2 \qquad (15)$$

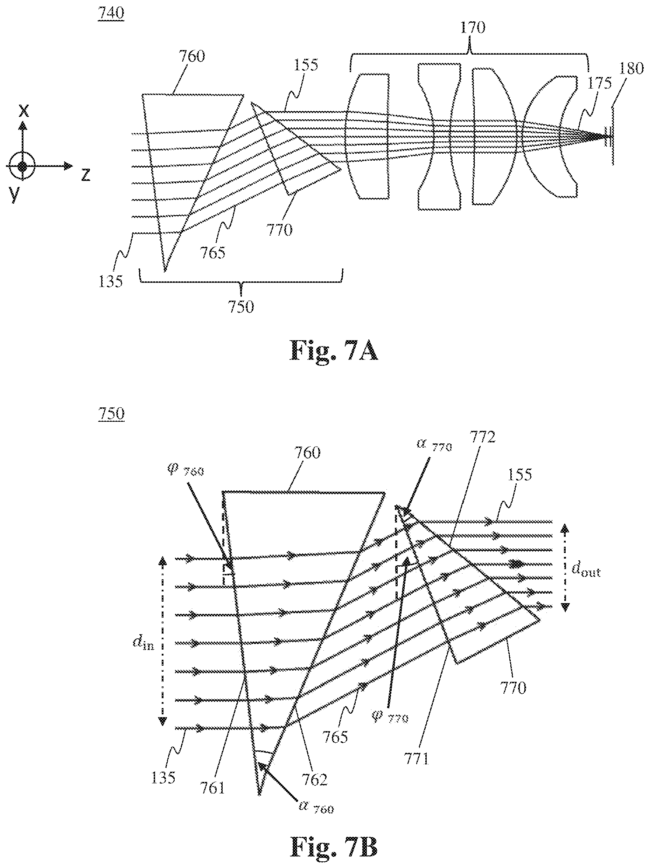

In Fig 7A, a cross-sectional view of a third exemplary embodiment of the receiver unit 740 is illustrated. The optical layout is illustrated along zx plane. Herein, the scanning direction is realized by a rotation of the scanner unit 120 around the y-axis.. The receiver unit 740 comprises an anamorph prism system 750, a lens system 170 and a two-dimensional detector 180. The lens system 170 and the two-dimensional detector 180 are analogous to the lens system 170 and the two-dimensional detector 180 of the receiver unit 140, and therefore are not discussed for the receiver unit 740. The anamorph prism system 750 comprises a first anamorph prism 760, for example a first transmissive anamorph prism, and a second anamorph prism 770, for example a second transmissive anamorph prism. The detailed construction of the anamorph prism system 750 will be described along Fig. 7B.

As illustrated, the anamorph prism system 750 operates in pure transmission by means of an anamorph prism pair 760, 770, which are sequentially arranged along the optical axis of the receiver unit 740. Hence, the anamorph prism system 750 operates as a socalled two-prism beam expander in order to collectively provide the predefined factor, hereinafter referred to as the expansion factor N. The second anamorph prism 770 then projects the processed beam 155 onto the lens system 170. The lens system 170 then focuses the processed beam 155 received from the second anamorph prism 770, and the imaging beam or focused beam 175 is then projected onto the two-dimensional detector 180, for example onto the two-dimensional pixelated-imaging array of photo-sensing pixels or sensors, thereby generating an image onto the two-dimensional detector 180 based on the processed beam 155.

Since the anamorph prism pair 760, 770 are sequentially arranged along the optical axis and are working in pure transmission, the anamorph prism system 750 does not fold the optical axis. However, a minor lateral offset of the optical axis is introduced due to their respective relationships between the angle of incident and angle of refraction. The offset can be pre-determined as their refraction properties can be derived from their optical properties, and therefore the anamorph prism pair 760, 770 can be appropriately positioned between the scanner unit 120 and the imaging unit 160.

In Fig. 7B, a cross-sectional view of the anamorph wedge prism 750 of Fig. 7A is illustrated. The anamorph prism system 750 comprises a first anamorph prism 760 comprising a first transmissive surface 761 and a second transmissive surface 762, for example, planar optical surfaces. The anamorph prism system 750 further comprises a second anamorph prism 770 comprising a first transmissive surface 771 and a second transmissive surface 772, for example, planar optical surfaces. The first anamorph prism 760 and the second anamorph prism 770 may be made of a transparent optical material, e.g. glass or plastic. Additionally, the first anamorph prism 760 may comprise transmissive band-pass filter coatings on the first transmissive surface 761 and on the second transmissive surface 762. Analogously, the second anamorph prism 770 may comprise transmissive band-pass filter coatings on the first transmissive surface 771 and on the second transmissive surface 772.

For the first anamorph prism 760, the second transmissive surface 762 is tilted by a wedge angle $\alpha_{760}$ with respect to the first transmissive surface 761. Additionally, the first anamorph prism 760 is tilted by a tilt angle $\varphi_{760}$ with respect to a normal on the optical axis of the receiver unit 740. For the second anamorph prism 770, the second transmissive surface 772 is tilted by a wedge angle $\alpha_{770}$ with respect to the first transmissive surface 771. Additionally, the first anamorph prism 770 is tilted by a tilt angle $\varphi_{770}$ with respect to a normal on the optical axis of the receiver unit 740.

As illustrated, the reflected radiation 135, for example with a beam width $d_{in}$, first refracts through the first transmissive surface 761 of the first anamorph prism 760, enters the transparent optical material. Afterwards, the reflected radiation 135 refracts through the second transmissive surface 762 and finally propagates towards the second anamorph prism 770 in the form of a tilted beam 765. In the second anamorph prism 770, the tilted beam 765 first refracts through the first transmissive surface 771, enters the transparent optical material. Afterwards, the tilted beam 765 again refracts through the second transmissive surface 772 and leaves the second anamorph prism 770 in the form of the processed beam 155, for example with a beam width $d_{out}$. The processed beam 155 leaves the second anamorph prism 770 in a direction parallel to the incident direction of the reflected radiation 135 at the first anamorph prism 760. Beam widths are changed in the direction of the x-axis. There is no beam width compression in the direction of the y-axis.

The wedge angles $\alpha_{760}$, $\alpha_{770}$, the refractive indices of the transparent materials, and the tilt angles $\varphi_{760}$, $\varphi_{770}$ for the first anamorph prism 760 and the second anamorph prism 770, respectively, can be adjusted in order to adjust the expansion factor N, which is given as:

$$N = \prod_{i=1}^{4} \frac{\cos(RAED_i)}{\cos(RAID_i)} \qquad (16)$$

where, $RAED_i$ is a ray angle of exitance from prism surface i and $RAID_i$ is a ray angle of incidence on prism surface i.

The relationship between the input width $d_{in}$ and the output width $d_{out}$ can be given according to equation (4). For example, if the first anamorph prism 760 has a tilt angle $\varphi_{760} = 6.828$ degrees, a wedge angle $\alpha_{760} = 30$ degrees, and the refractive index of the optical material is 1.759, and the second anamorph prism 770 has a tilt angle $\varphi_{770} = 20.817$ degrees, a wedge angle $\alpha_{770} = 30$ degrees, and the refractive index of the optical material is 1.759, the expansion factor N according to equation (16) is equal to around 2.

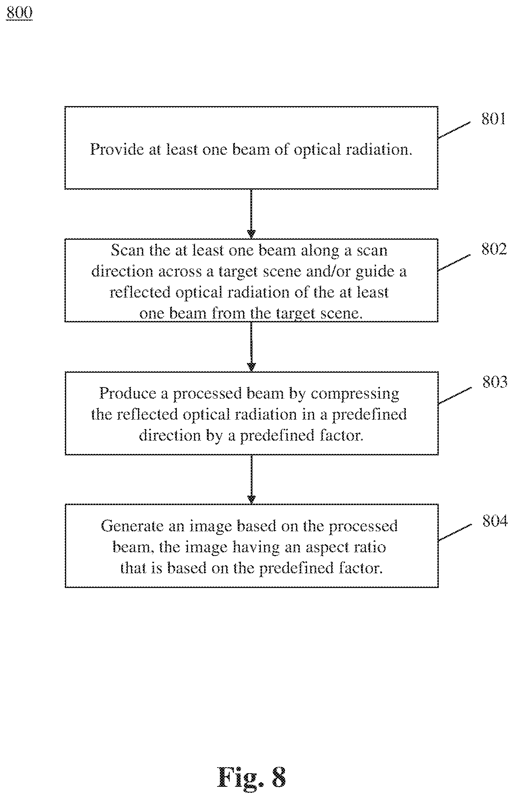

In Fig. 8, an exemplary embodiment of the method 800 according to the second aspect of this disclosure is illustrated. In a first step 801, at least one beam of optical radiation is provided. In a second step 802, the at least one beam is scanned along a scan direction across a target scene and/or a reflected optical radiation of the at least one beam is guided from the target scene. In a third step 803, a processed beam is produced by compressing the reflected optical radiation in a predefined direction by a predefined factor.

Finally, in a fourth step 804, an image is generated based on the processed beam, the image having an aspect ratio that is based on the predefined factor.

## Claims

1.  An optical detection system (100) comprising:

    a transmitter unit (110) configured to emit at least one beam of optical radiation (115);
    a receiver unit (140, 640, 740) comprising an imaging unit (160) and an anamorph prism system (150, 650, 750), wherein the imaging unit comprises a two-dimensional detector (180) and a lens system (170); and
    at least one scanner unit (120) configured to guide the at least one beam (115) along a scan direction across a target scene (130) and/or to guide a reflected optical radiation (135) of the at least one beam (115) from the target scene (130) to the receiver unit (140, 640, 740),
    wherein the anamorph prism system (150, 650, 750) is configured to produce a processed beam (155) by compressing the reflected optical radiation (135) in a predefined direction by a predefined factor, and
    wherein the lens system (170) is configured to focus the processed beam (155) from the anamorph prism system (150, 650, 750) onto the two-dimensional detector (180), and
    wherein the imaging unit (160) is configured to generate an image (420) based on the processed beam (155) focused on the two-dimensional detector (180), the image (420) having an aspect ratio that is based on the predefined factor, wherein compression directly after the anamorph prism system results in an expansion of the image in the detector plane.

2.  The optical detection system according to claim 1, wherein:

    the anamorph prism system (150, 650, 750) is configured to compress the reflected optical radiation (135) by expanding an angular spectrum of the reflected optical radiation (135) in the predefined direction by the predefined factor, and
    the predefined factor is greater than 1.

3.  The optical detection system according to claim 1 or 2, wherein the anamorph prism system (150) is configured to deviate a light path of the reflected optical radiation (135) from the at least one scanner unit (120) towards the imaging unit (160) by about 90 degrees.

4.  The optical detection system according any of claims 1 to 3, wherein the anamorph prism system (150) comprises an anamorph wedge prism (250) comprising a transmissive surface (251), a reflective surface (252), and an optical material in-between the transmissive surface (251) and the reflective surface (252).

5.  The optical detection system according to any of claims 1 to 4, wherein:

    the anamorph prism system (150) is configured to form an afocal system with a first angular magnification along a first axis and a second angular magnification along a second axis,
    the first axis and the second axis are orthogonal,
    the first axis or the second axis corresponds to the predefined direction, and
    a ratio between the first angular magnification and the second angular magnification is equal to the predefined factor.

6.  The optical detection system according to any of claims 1 to 5, wherein:

    the anamorph prism system (150) comprises a transmissive band-pass filter coating on at least one surface, and
    the transmissive band-pass filter coating is configured to transmit radiation within a wavelength range containing an emission spectrum of the at least one beam of optical radiation (115).

7.  The optical detection system according to any of claims 1 to 6, wherein:

    the anamorph prism system (150) comprises a reflective band-pass filter coating on at least one surface, and

the reflective band-pass filter coating is configured to reflect radiation within a wavelength range containing the emission spectrum of the at least one beam of optical radiation (115).

8. The optical detection system according to claims 1 or 2, wherein the anamorph prism system (650) comprises:

   a first anamorph wedge prism (660) comprising a transmissive surface (661), a reflective surface (662), and an optical material in-between the transmissive surface (661) and the reflective surface (662), and
   a second anamorph wedge prism (670) comprising a transmissive surface (671), a reflective surface (672), and an optical material in-between the transmissive surface (671) and the reflective surface (672).

9. The optical detection system according to claim 8, wherein:

   the first anamorph wedge prism (660) is configured to receive the reflected optical radiation (135) from the at least one scanner unit (120) and to produce a processed first beam (665), and
   the second anamorph wedge prism (670) is configured to receive the processed first beam (665) from the first anamorph wedge prism (660) and to produce the processed beam (155),
   the anamorph prism system (650) is configured to deviate a light path of the reflected optical radiation (135) from the at least one scanner unit (120) towards the imaging unit (160) by about 180 degrees.

10. The optical detection system according to claim 8 or 9, wherein:

    the first anamorph prism (660) is configured to produce the processed first beam (665) by compressing the reflected optical radiation (135) in the predefined direction by a first predefined factor,
    the second anamorph prism (670) is configured to produce the processed beam (155) by compressing the processed first beam (665) in the predefined direction by a second predefined factor, and
    the predefined factor is determined by a product of the first predefined factor and the second predefined factor.

11. The optical detection system according to claim 1 or 2, wherein the anamorph prism system (750) comprises:

    a first prism (760) comprising a first transmissive surface (761), a second transmissive surface (762), and an optical material in-between the first transmissive surface (761) and the second transmissive surface (762), and
    a second prism (770) comprising a first transmissive surface (771), a second transmissive surface (772), and an optical material in-between the first transmissive surface (771) and the second transmissive surface (772).

12. The optical detection system according to claim 11, wherein:

    the first prism (760) and the second prism (770) are sequentially arranged along an optical axis of the receiver unit (740), and
    the anamorph prism system (750) is configured to deviate the position of the optical axis of the receiver unit (740) by a predefined offset, and/or
    wherein the predefined factor is determined as a function of a ray angle of exitance from prism surfaces through which the reflected optical radiation (135) traverses and a ray angle of incidence on prism surfaces through which the reflected optical radiation (135) traverses.

13. The optical detection system according to one of the claims 1 to 12, wherein the lens system (170) is configured to focus the processed beam (155) received at different angles of incidence onto the two-dimensional detector (180) and/or
    wherein the lens system (170) is rotational symmetric with respect to the optical axis of the receiver unit (140, 640, 740).

14. An optical detection method (800) comprising:

    providing (801) at least one beam of optical radiation,
    scanning (802) the at least one beam along a scan direction across a target scene and/or guiding a reflected optical radiation of the at least one beam from the target scene,
    producing (803), with an anamorph prism system (150, 650, 750), a processed beam (155) by compressing the reflected optical radiation in a predefined direction by a predefined factor,
    focusing the processed beam (155) from the anamorph prism system (150, 650, 750) onto a two-dimensional detector (180), and

generating (804) an image based on the processed beam (155) focused on the two-dimensional detector (180), the image having an aspect ratio that is based on the predefined factor, wherein compression directly after the anamorph prism system results in an expansion of the image in the detector plane.

**Patentansprüche**

1. Optisches Detektionssystem (100), umfassend:

   eine Übertragungseinheit (110), die dazu konfiguriert ist, mindestens einen Strahl optischer Strahlung (115) zu emittieren;

   eine Empfängereinheit (140, 640, 740), umfassend eine Bildgebungseinheit (160) und ein anamorphes Prismensystem (150, 650, 750), wobei die Bildgebungseinheit einen zweidimensionalen Detektor (180) und ein Linsensystem (170) umfasst; und

   mindestens eine Scannereinheit (120), die dazu konfiguriert ist, den mindestens einen Strahl (115) entlang einer Abtastrichtung über eine Zielszene (130) zu führen und/oder eine reflektierte optische Strahlung (135) des mindestens einen Strahles (115) von der Zielszene (130) an die Empfängereinheit (140, 640, 740) zu führen;

   wobei das anamorphe Prismensystem (150, 650, 750) dazu konfiguriert ist, einen verarbeiteten Strahl (155) durch Komprimieren der reflektierten optischen Strahlung (135) in einer vordefinierten Richtung um einen vordefinierten Faktor zu produzieren, und

   wobei das Linsensystem (170) dazu konfiguriert ist, den verarbeiteten Strahl (155) von dem anamorphen Prismensystem (150, 650, 750) auf den zweidimensionalen Detektor (180) zu fokussieren, und

   wobei die Bildgebungseinheit (160) dazu konfiguriert ist, ein Bild (420) basierend auf dem verarbeiteten Strahl (155), der auf den zweidimensionalen Detektor (180) fokussiert ist, zu erzeugen, wobei das Bild (420) ein Aspektverhältnis aufweist, das auf dem vordefinierten Faktor basiert, wobei das Komprimieren direkt nach dem anamorphen Prismensystem eine Ausdehnung des Bildes in der Detektorebene ergibt.

2. Optisches Detektionssystem nach Anspruch 1, wobei:

   das anamorphe Prismensystem (150, 650, 750) dazu konfiguriert ist, die reflektierte optische Strahlung (135) durch Ausdehnen eines Winkelspektrums der reflektierten optischen Strahlung (135) in der vordefinierten Richtung um den vordefinierten Faktor zu komprimieren, und

   der vordefinierte Faktor größer als 1 ist.

3. Optisches Detektionssystem nach Anspruch 1 oder 2, wobei das anamorphe Prismensystem (150) dazu konfiguriert ist, einen Lichtpfad der reflektierten optischen Strahlung (135) von der mindestens einen Scannereinheit (120) in Richtung der Bildgebungseinheit (160) um etwa 90 Grad abzulenken.

4. Optisches Detektionssystem nach einem der Ansprüche 1 bis 3, wobei das anamorphe Prismensystem (150) ein anamorphes Keilprisma (250) umfasst, umfassend eine durchlässige Oberfläche (251), eine reflektierende Oberfläche (252) und ein optisches Material zwischen der durchlässigen Oberfläche (251) und der reflektierenden Oberfläche (252).

5. Optisches Detektionssystem nach einem der Ansprüche 1 bis 4, wobei:

   das anamorphe Prismensystem (150) dazu konfiguriert ist, ein afokales System mit einer ersten Winkelvergrößerung entlang einer ersten Achse und einer zweiten Winkelvergrößerung entlang einer zweiten Achse zu bilden,

   die erste Achse und die zweite Achse orthogonal sind,

   die erste Achse oder die zweite Achse der vordefinierten Richtung entspricht und

   ein Verhältnis zwischen der ersten Winkelvergrößerung und der zweiten Winkelvergrößerung gleich dem vordefinierten Faktor ist.

6. Optisches Detektionssystem nach einem der Ansprüche 1 bis 5, wobei:

   das anamorphe Prismensystem (150) eine durchlässige Bandpassfilterbeschichtung auf mindestens einer Oberfläche umfasst und

die durchlässige Bandpassfilterbeschichtung dazu konfiguriert ist, Strahlung innerhalb eines Wellenlängenbereichs zu übertragen, der ein Emissionsspektrum des mindestens einen Strahles optischer Strahlung (115) enthält.

7. Optisches Detektionssystem nach einem der Ansprüche 1 bis 6, wobei:

das anamorphe Prismensystem (150) eine reflektierende Bandpassfilterbeschichtung auf mindestens einer Oberfläche umfasst und
die reflektierende Bandpassfilterbeschichtung dazu konfiguriert ist, Strahlung innerhalb eines Wellenlängenbereichs zu reflektieren, der das Emissionsspektrum des mindestens einen Strahles optischer Strahlung (115) enthält.

8. Optisches Detektionssystem nach Anspruch 1 oder 2, wobei das anamorphe Prismensystem (650) Folgendes umfasst:

ein erstes anamorphes Keilprisma (660), umfassend eine durchlässige Oberfläche (661), eine reflektierende Oberfläche (662) und ein optisches Material zwischen der durchlässigen Oberfläche (661) und der reflektierenden Oberfläche (662), und
ein zweites anamorphes Keilprisma (670), umfassend eine durchlässige Oberfläche (671), eine reflektierende Oberfläche (672) und ein optisches Material zwischen der durchlässigen Oberfläche (671) und der reflektierenden Oberfläche (672).

9. Optisches Detektionssystem nach Anspruch 8, wobei:

das erste anamorphe Keilprisma (660) dazu konfiguriert ist, die reflektierte optische Strahlung (135) von der mindestens einen Scannereinheit (120) zu empfangen und einen verarbeiteten ersten Strahl (665) zu produzieren, und
das zweite anamorphe Keilprisma (670) dazu konfiguriert ist, den verarbeiteten ersten Strahl (665) von dem ersten anamorphen Keilprisma (660) zu empfangen und den verarbeiteten Strahl (155) zu produzieren,
das anamorphe Prismensystem (650) dazu konfiguriert ist, einen Lichtpfad der reflektierten optischen Strahlung (135) von der mindestens einen Scannereinheit (120) in Richtung der Bildgebungseinheit (160) um etwa 180 Grad abzulenken.

10. Optisches Detektionssystem nach Anspruch 8 oder 9, wobei:

das erste anamorphe Prisma (660) dazu konfiguriert ist, den verarbeiteten ersten Strahl (665) durch Komprimieren der reflektierten optischen Strahlung (135) in der vordefinierten Richtung um einen ersten vordefinierten Faktor zu produzieren,
das zweite anamorphe Prisma (670) dazu konfiguriert ist, den verarbeiteten Strahl (155) durch Komprimieren des verarbeiteten ersten Strahles (665) in der vordefinierten Richtung um einen zweiten vordefinierten Faktor zu produzieren, und
der vordefinierte Faktor durch ein Produkt aus dem ersten vordefinierten Faktor und dem zweiten vordefinierten Faktor bestimmt wird.

11. Optisches Detektionssystem nach Anspruch 1 oder 2, wobei das anamorphe Prismensystem (750) Folgendes umfasst:

ein erstes Prisma (760), umfassend eine erste durchlässige Oberfläche (761), eine zweite durchlässige Oberfläche (762) und
ein optisches Material zwischen der ersten durchlässigen Oberfläche (761) und der zweiten durchlässigen Oberfläche (762), und
ein zweites Prisma (770), umfassend eine erste durchlässige Oberfläche (771), eine zweite durchlässige Oberfläche (772) und
ein optisches Material zwischen der ersten durchlässigen Oberfläche (771) und der zweiten durchlässigen Oberfläche (772).

12. Optisches Detektionssystem nach Anspruch 11, wobei:

das erste Prisma (760) und das zweite Prisma (770) sequenziell entlang einer optischen Achse der Empfängereinheit (740) angeordnet sind und

das anamorphe Prismensystem (750) dazu konfiguriert ist, die Position der optischen Achse der Empfängereinheit (740) um einen vordefinierten Versatz abzulenken, und/oder

wobei der vordefinierte Faktor als eine Funktion eines Strahlenaustrittswinkels von Prismenflächen, durch welche die reflektierte optische Strahlung (135) läuft, und eines Strahleneinfallswinkels auf Prismenflächen, durch welche die reflektierte optische Strahlung (135) läuft, bestimmt wird.

13. Optisches Detektionssystem nach einem der Ansprüche 1 bis 12, wobei das Linsensystem (170) dazu konfiguriert ist, den verarbeiteten Strahl (155), der unter verschiedenen Einfallswinkeln empfangen wird, auf den zweidimensionalen Detektor (180) zu fokussieren, und/oder

wobei das Linsensystem (170) rotationssymmetrisch in Bezug auf die optische Achse der Empfängereinheit (140, 640, 740) ist.

14. Optisches Detektionsverfahren (800), umfassend:

Bereitstellen (801) mindestens eines Strahles optischer Strahlung,

Scannen (802) des mindestens einen Strahles entlang einer Scanrichtung über eine Zielszene und/oder Führen einer reflektierten optischen Strahlung des mindestens einen Strahles von der Zielszene,

Produzieren (803), mit einem anamorphen Prismensystem (150, 650, 750), eines verarbeiteten Strahles (155) durch Komprimieren der reflektierten optischen Strahlung in einer vordefinierten Richtung um einen vordefinierten Faktor,

Fokussieren des verarbeiteten Strahles (155) von dem anamorphen Prismensystem (150, 650, 750) auf einen zweidimensionalen Detektor (180) und

Erzeugen (804) eines Bildes basierend auf dem verarbeiteten Strahl (155), der auf den zweidimensionalen Detektor (180) fokussiert ist, wobei das Bild ein Aspektverhältnis aufweist,

das auf dem vordefinierten Faktor basiert, wobei das Komprimieren direkt nach dem anamorphen Prismensystem eine Ausdehnung des Bildes in der Detektorebene ergibt.

**Revendications**

1. Système de détection optique (100) comprenant :

une unité émettrice (110) configurée pour émettre au moins un faisceau de rayonnement optique (115) ;
une unité réceptrice (140, 640, 740) comprenant une unité d'imagerie (160) et un système de prisme anamorphe (150, 650, 750), dans lequel l'unité d'imagerie comprend un détecteur bidimensionnel (180) et un système de lentilles (170) ; et
au moins une unité de balayage (120) configurée pour guider l'au moins un faisceau (115) le long d'une direction de balayage à travers une scène cible (130) et/ou pour guider un rayonnement optique réfléchi (135) de l'au moins un faisceau (115) de la scène cible (130) vers l'unité réceptrice (140, 640, 740) ;
dans lequel le système de prisme anamorphe (150, 650, 750) est configuré pour produire un faisceau traité (155) en comprimant le rayonnement optique réfléchi (135) dans une direction prédéfinie par un facteur prédéfini, et
dans lequel le système de lentilles (170) est configuré pour focaliser le faisceau traité (155) provenant du système de prisme anamorphe (150, 650, 750) sur le détecteur bidimensionnel (180), et
dans lequel l'unité d'imagerie (160) est configurée pour générer une image (420) sur la base du faisceau traité (155) focalisé sur le détecteur bidimensionnel (180), l'image (420) ayant un rapport d'aspect qui est basé sur le facteur prédéfini, dans lequel la compression directement après le système de prisme anamorphe entraîne une expansion de l'image dans le plan du détecteur.

2. Système de détection optique selon la revendication 1, dans lequel :

le système de prisme anamorphe (150, 650, 750) est configuré pour comprimer le rayonnement optique réfléchi (135) en élargissant un spectre angulaire du rayonnement optique réfléchi (135) dans la direction prédéfinie par le facteur prédéfini, et le facteur prédéfini est supérieur à 1.

3. Système de détection optique selon la revendication 1 ou 2, dans lequel le système de prisme anamorphe (150) est configuré pour dévier un trajet lumineux du rayonnement optique réfléchi (135) de l'au moins une unité de balayage (120) vers l'unité d'imagerie (160) d'environ 90 degrés.

4. Système de détection optique selon l'une quelconque des revendications 1 à 3, dans lequel le système de prisme anamorphe (150) comprend un prisme en coin anamorphe (250) comprenant une surface transmissive (251), une surface réfléchissante (252), et un matériau optique entre la surface transmissive (251) et la surface réfléchissante (252).

5. Système de détection optique selon l'une quelconque des revendications 1 à 4, dans lequel :

le système de prisme anamorphe (150) est configuré pour former un système afocal avec un premier grossissement angulaire le long d'un premier axe et un second grossissement angulaire le long d'un second axe, le premier axe et le second axe sont orthogonaux, le premier axe ou le second axe correspond à la direction prédéfinie, et un rapport entre le premier grossissement angulaire et le second grossissement angulaire est égal au facteur prédéfini.

6. Système de détection optique selon l'une quelconque des revendications 1 à 5, dans lequel :

le système de prisme anamorphe (150) comprend un revêtement de filtre passe-bande transmissif sur au moins une surface, et le revêtement de filtre passe-bande transmissif est configuré pour transmettre un rayonnement dans une plage de longueurs d'onde contenant un spectre d'émission de l'au moins un faisceau de rayonnement optique (115).

7. Système de détection optique selon l'une quelconque des revendications 1 à 6, dans lequel :

le système de prisme anamorphe (150) comprend un revêtement de filtre passe-bande réfléchissant sur au moins une surface, et le revêtement de filtre passe-bande réfléchissant est configuré pour réfléchir un rayonnement dans une plage de longueurs d'onde contenant un spectre d'émission de l'au moins un faisceau de rayonnement optique (115).

8. Système de détection optique selon la revendication 1 ou 2, dans lequel le système de prisme anamorphe (650) comprend :

un premier prisme en coin anamorphe (660) comprenant une surface transmissive (661), une surface réfléchissante (662), et un matériau optique entre la surface transmissive (661) et la surface réfléchissante (662), et un second prisme en coin anamorphe (670) comprenant une surface transmissive (671), une surface réfléchissante (672), et un matériau optique entre la surface transmissive (671) et la surface réfléchissante (672).

9. Système de détection optique selon la revendication 8, dans lequel :

le premier prisme en coin anamorphe (660) est configuré pour recevoir le rayonnement optique réfléchi (135) provenant de l'au moins une unité de balayage (120) et pour produire un premier faisceau traité (665), et le second prisme en coin anamorphe (670) est configuré pour recevoir le premier faisceau traité (665) provenant du premier prisme en coin anamorphe (660) et pour produire le faisceau traité (155), le système de prisme anamorphe (650) est configuré pour dévier un trajet lumineux du rayonnement optique réfléchi (135) de l'au moins une unité de balayage (120) vers l'unité d'imagerie (160) d'environ 180 degrés.

10. Système de détection optique selon la revendication 8 ou 9, dans lequel :

le premier prisme anamorphe (660) est configuré pour produire le premier faisceau traité (665) en comprimant le rayonnement optique réfléchi (135) dans la direction prédéfinie par un premier facteur prédéfini, le second prisme anamorphe (670) est configuré pour produire le faisceau traité (155) en comprimant le premier faisceau traité (665) dans la direction prédéfinie par un second facteur prédéfini, et le facteur prédéfini est déterminé par un produit du premier facteur prédéfini et du second facteur prédéfini.

11. Système de détection optique selon la revendication 1 ou 2, dans lequel le système de prisme anamorphe (750) comprend :

un premier prisme (760) comprenant une première surface transmissive (761), une seconde surface transmissive (762), et
un matériau optique entre la première surface transmissive (761) et la seconde surface transmissive (762), et
un second prisme (770) comprenant une première surface transmissive (771), une seconde surface transmissive (772), et
un matériau optique entre la première surface transmissive (771) et la seconde surface transmissive (772).

12. Système de détection optique selon la revendication 11, dans lequel :

le premier prisme (760) et le second prisme (770) sont disposés séquentiellement le long d'un axe optique de l'unité réceptrice (740), et
le système de prisme anamorphe (750) est configuré pour dévier la position de l'axe optique de l'unité réceptrice (740) d'un décalage prédéfini, et/ou
dans lequel le facteur prédéfini est déterminé comme une fonction d'un angle de rayon de sortie des surfaces de prisme à travers lesquelles traverse le rayonnement optique réfléchi (135) et d'un angle de rayon d'incidence sur les surfaces de prisme à travers lesquelles traverse le rayonnement optique réfléchi (135).

13. Système de détection optique selon l'une des revendications 1 à 12, dans lequel le système de lentilles (170) est configuré pour focaliser le faisceau traité (155) reçu à différents angles d'incidence sur le détecteur bidimensionnel (180) et/ou
dans lequel le système de lentilles (170) est symétrique en rotation par rapport à l'axe optique de l'unité réceptrice (140, 640, 740).

14. Procédé de détection optique (800) comprenant :

la fourniture (801) d'au moins un faisceau de rayonnement optique,
le balayage (802) de l'au moins un faisceau le long d'une direction de balayage à travers une scène cible et/ou le guidage d'un rayonnement optique réfléchi de l'au moins un faisceau à partir de la scène cible,
la production (803), avec un système de prisme anamorphe (150, 650, 750), d'un faisceau traité (155) en comprimant le rayonnement optique réfléchi dans une direction prédéfinie par un facteur prédéfini,
le fait de focaliser le faisceau traité (155) provenant du système de prisme anamorphe (150, 650, 750) sur le détecteur bidimensionnel (180), et
la génération (804) d'une image sur la base du faisceau traité (155) focalisé sur le détecteur bidimensionnel (180), l'image ayant un rapport d'aspect qui est basé sur le facteur prédéfini,
dans lequel le fait d'effectuer la compression directement après le système de prisme anamorphe entraîne une expansion de l'image dans le plan du détecteur.

Fig. 1

Fig. 2A

Fig. 2B

**Fig. 3**

**Fig. 4A**

**Fig. 4B**

**Fig. 5A**

**Fig. 5B**

**Fig. 6A**

**Fig. 6B**

**Fig. 7A**

**Fig. 7B**

800

```
┌─────────────────────────────────────┐
│                                     │        801
│  Provide at least one beam of optical radiation.   │
│                                     │
└─────────────────────────────────────┘
                    │
                    ▼
┌─────────────────────────────────────┐
│  Scan the at least one beam along a scan   │        802
│  direction across a target scene and/or guide a │
│  reflected optical radiation of the at least  │
│  one beam from the target scene.          │
└─────────────────────────────────────┘
                    │
                    ▼
┌─────────────────────────────────────┐
│  Produce a processed beam by compressing  │        803
│  the reflected optical radiation in a predefined │
│  direction by a predefined factor.        │
└─────────────────────────────────────┘
                    │
                    ▼
┌─────────────────────────────────────┐
│  Generate an image based on the processed │        804
│  beam, the image having an aspect ratio    │
│  that is based on the predefined factor.    │
└─────────────────────────────────────┘
```

# Fig. 8

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2020241141 A1
- DE 102004047022 A1
- EP 3584609 A1